(19) Europäisches Patentamt
European Patent Office
Office européen des brevets

(11) **EP 3 617 824 B1**

(12) **EUROPEAN PATENT SPECIFICATION**

(45) Date of publication and mention
of the grant of the patent:
**01.11.2023 Bulletin 2023/44**

(51) International Patent Classification (IPC):
***G05B 23/02*** *(2006.01)* ***G06Q 10/06*** *(2023.01)*
***G05B 19/042*** *(2006.01)*

(21) Application number: **18191269.2**

(22) Date of filing: **28.08.2018**

(52) Cooperative Patent Classification (CPC):
**G05B 23/0283; G06Q 10/06;** G05B 19/0428

(54) **SYSTEM, APPARATUS AND METHOD OF MANAGING AN ASSET USING AN ASSET MODEL**

SYSTEM, VORRICHTUNG UND VERFAHREN ZUR VERWALTUNG EINER ANLAGE UNTER
VERWENDUNG EINES ANLAGEMODELLS

SYSTÈME, APPAREIL ET PROCÉDÉ DE GESTION D'UN ACTIF À L'AIDE D'UN MODÈLE D'ACTIFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.03.2020 Bulletin 2020/10**

(73) Proprietor: **Siemens Aktiengesellschaft
80333 München (DE)**

(72) Inventors:
• **NAIR, Sudev
560078 Bangalore (IN)**
• **BOSCO, Arianna
80638 München (DE)**
• **HEINRICH, Christoph
86609 Donauwörth (DE)**
• **HILDEBRANDT, Marcel
81737 München (DE)**
• **KHALIL, Mohamed
80807 München (DE)**

(74) Representative: **Patentanwaltskanzlei WILHELM
& BECK
Prinzenstraße 13
80639 München (DE)**

(56) References cited:
**WO-A2-2016/033247 US-A1- 2017 323 231
US-A1- 2018 210 436**

**Description**

The present invention relates to managing an asset through the lifecycle of the asset.

Performance of an asset may impact performance of technical systems associated with the asset. To map the impact, tracea-bility of the asset is paramount. For example, when an asset fails, it is possible that the asset is removed from a manufacturing line and taken for maintenance. After the end of maintenance period, the asset may not be deployed in a same location in the same technical system. Therefore, the asset needs to be tracked in order that the performance of the asset is evaluated properly.

The difficulty in tracking the asset may lead to difficulty in assessing expended life of the asset. Inaccurate analysis of the expended life may lead to difficulty in determining availability and reliability of the technical system employing the asset.

One of known techniques involves an asset management system that manages an asset based on location of the asset. The technique relies on detection of a change in location of the asset based on sensor data generated from the asset. However, the accuracy of the above technique may be largely based on the sensor data generated by sensors. Therefore, the technique may depend heavily on how sensors are placed and accuracy of the sensor data. Such a technique may not accurately track the asset if the sensor data is inaccurate and thereby impede effective management of the asset.

From document WO 2016/033247 A2 a population-based learning with deep belief networks is known. From document US 2017/323231 A1 a computing system to control the use of physical state attainment of assets to meet temporal performance criteria is known. From document US 2018/210436 A1 an integrated digital twin for an industrial facility is known.

In light of the above, there exists a need to manage an asset though the lifecycle of the asset.

Therefore, it is an object of the present invention to provide a system, apparatus and method for managing an asset using an asset model through the life-cycle of the asset.

The object of the present invention is achieved by a method of generating the asset model for the asset based on validated profile associated with the asset and managing the asset using the asset model through the life-cycle of the asset. Example of assets include any machinery in a technical system or technical installation/facility such as motor, gear, bearing, shaft, switchgear, rotor, circuit breaker, protection devices, remote terminal units, transformers, reactors, disconnectors, gear-drive, gradient coils, magnet, radio frequency coils etc. Example technical systems include electric vehicle, automation units, turbines, large drives, Magnetic Resonance Imaging (MRI) scanner, etc. Example facility/technical installation may be a complex industrial set-up with a plurality of assets such as a power plant, wind farm, power grid, manufacturing facility, process plants, automation facility and so on. For example, if the technical installation is an automation facility then the technical systems include robots and the assets may be motors, bearing or any other equipment in the robots.

The method comprises receiving various types of data associated with condition of the asset. The condition data is received from different sources (e.g., sensors, user devices, etc.). The sensors measure operating parameters associated with the asset. For example, the sensors may include thermal imaging devices, vibration sensors, current and voltage sensors, etc. The term "operation parameter" refers to one or more characteristics of the asset. The operation parameters are used to define an operation profile of the asset. Accordingly, the condition data is a measure of the operating parameters associated with the operation of the asset and is referred hereinafter to as "sensor data". For example, the sensor data includes data points representing vibration, temperature, current, magnetic flux, velocity, power associated with the asset such as a rotor in a turbine.

The method further comprises selecting the validated profile for the asset based on the sensor data. The validated profile is selected from a set of profiles associable with the asset. As used herein, the term "profile" refers to the data based representations of the asset as a function of operation environment, operation profile and/or load profile associated with the asset. In an embodiment, the set of profiles are generated based on historical operation profile of the asset. In another embodiment, the set of profiles are generated based on a fleet profile associated with a fleet of assets. The method comprises managing the asset using the asset model through the life-cycle of the asset.

The method may comprise generating the set of profiles for the asset and validating the set of profiles based on a digital twin of the asset. Further, the method comprises identifying one or more validated profiles from the validated set of profiles. The validated set of profiles may be generated in real-time or pre-stored in a database.

To validate the set of profiles, the method may comprise determining a profile variation for each of the set of profiles. The profile variation is determined by comparing asset profile and sensor profiles of the plurality of sensors. As used herein "asset profile" refers to the sensor data, operation profile of the asset and load profile of the asset. Further, "sensor profile" refers to sensor parameters such as sensor sensitivity and sensor boundary conditions. The sensitivity of the sensors is determined respect to interdependent changes in the sensor data. The sensitivity is determined by performing a perturbation analysis on the sensors iteratively. The boundary conditions refer to manufacturing thresholds associated with each of the sensors. In an embodiment, the asset profile refers to real-time sensor data received from the sensors and the sensor profile refers to virtual sensor data generated based on the digital twin of the asset.

The method may comprise determining the profiles whose profile variation is within a predetermined variability threshold. Accordingly, if the profile variation is within the variability threshold the profiles are considered as validated. In an embodiment, a digital twin graph is used to determine the profile variation and the variability threshold. The digital twin graph includes multiple graphical models of the operating parameters, load profile, etc. For example, the digital twin graph may include ontology models having ontological data of the asset, prediction models with probabilistic data associated with condition based probability and meta models. The ontological data of the asset include asset properties and the independency between them. The meta models are simplified high-fidelity digital twins of the asset.

The method may comprise determining a similarity co-efficient between the sensor data and the validated profiles. The similarity co-efficient is determined by comparing the sensor data and the validated profiles. In an embodiment, the similarity coefficient is determined by comparing the sensor data and the set of profiles associable with the asset. In another embodiment, the similarity coefficient is determined by a combination of geometric similarity and proportion of common data between the sensor data and the profiles. The validated profile with highest similarity co-efficient is selected as the validated profile that is used to generate the asset model. In an embodiment, a similarity threshold is used to determine the one or more validated profiles from the set of profiles. Accordingly, the validated profile with the highest similarity co-efficient is selected from the one or more validated profiles.

The method may comprise selecting the validated profile based on the sensor data by using one of supervised learning technique and unsupervised learning technique. In an embodiment, the supervised learning techniques and unsupervised learning techniques are implemented in the digital twin graph of the asset.

The method may comprise generating a fault model representing the operation profile using fault signatures of one or more fault indications. The fault indications refer to anomalies detected in the sensor data. The fault signature refers to an electronic footprint of the fault indications in the asset. The fault signatures contain information regarding various health status conditions of the asset. Fault signatures include the validated location each of the fault indications, the location nexus, harmonics, anomaly rate or an anomaly pattern associated with the anomalies in the sensor data. The fault model includes the fault signatures, the operating parameters, interaction between the fault indications and predicted impact of the at fault indications on the asset. The fault model can be scaled to include multiple types of assets and a fleet of same type of assets. The one or more fault indications are detected in the sensor data based on comparison with the validated profile. The asset model updated with the fault model to detect and predict faults in the asset.

The method may comprise determining validated remaining life for the selected validated profile. Further, the method may comprise updating the asset model with validated remaining life of the validated profile. The validated remaining life is used to determine an asset life. Asset life refers to life of the asset with and without the detected faults. The asset life includes asset remaining life, remaining useful life (RUL), down-time, maintenance time, etc. The method may comprise rendering the usage profile of the asset and representative view of the asset or a portion of the asset on a display device (such as desktop monitor, mobile screen, etc).

The representative view displays the asset model comprising the asset life, the fault model, the operating parameters, and predicted impact of the fault on the asset life. In an embodiment, the representative view of the portion of the asset, the technical system or the facility is rendered on one or more wearable devices. According to an embodiment of the invention, the representative view may be a holographic view. A hologram is a photographic recording of a light field that is used to display a multi-dimensional image of a holographed subject (asset, technical system or facility). The holographic view of the portion of the asset is coupled with information from the fault model pertaining to the detected fault.

The method may further comprise estimating an expended life of the asset based on the asset model. The expended life refers to spent life of the asset and may be represented as the usage profile of the asset. The expended life may be used to predict the asset remaining life. The method may comprise rendering a usage view of one of the assets and the portion of the asset on the display device based on the fault model. The usage view is based on the asset model and may depict a real-time degradation and a predicted degradation of the asset or the asset portion. The usage view can be rendered in the same manner as that of the representation view.

The method may comprise determining a remaining life of the technical system comprising the asset based on the asset remaining life, availability of spare parts and serviceability parameters. The serviceability parameters include parameters associated with serviceability of the asset and the technical system. For example, time required for serviceability, availability of service personnel, type of service, frequency of service, etc. The method may further comprise predicting a down-time for the facility based on the asset remaining life and the remaining life of the technical system.

The method may comprise instantiating the asset on an asset management system based on the asset model. Advantageously, the method links a previously un-recognizable asset on the asset management system. The method may further comprise tracking the asset through the life-cycle of the asset by generating the asset model in real-time. Therefore, the method enables tracking of assets in cases where identification details of the asset are not available or not recognizable. Advantageously, the method tracks the asset in terms of the asset life during its operation and after service. Advantageously, the method estimates the asset life without a need for the identification details or prior life details.

The object of the present invention is also achieved by an apparatus for managing an asset through life-cycle of the asset. The apparatus comprises one or more processing units and a memory unit communicative coupled to the one or more processing units. The memory unit comprises an asset module stored in the form of machine-readable instructions executable by the one or more processing units. The asset module is configured to perform method steps described above. The execution of the asset module can also be performed using coprocessors such as Graphical Processing Unit (GPU), Field Programmable Gate Array (FPGA) or Neural Processing/Compute Engines.

According to an embodiment of the present invention, the apparatus can be an edge computing device. As used herein, "edge computing" refers to computing environment that is capable of being performed on an edge device (e.g., connected to the sensors unit in an industrial setup on one end and to a remote server(s) such as for computing server(s) or cloud computing server(s) on the other end), which may be a compact computing device. A network of the edge computing devices can also be used to implement the apparatus. Such a network of edge computing devices is referred to as a fog network.

In another embodiment, the apparatus is a cloud computing system having a cloud computing based platform configured to provide a cloud service for analyzing condition data of the assets. As used herein, "cloud computing" refers to a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

Additionally, the object of the present invention is achieved by a system comprising one or more devices, such as the sensing units, capable of providing sensor data associated with operation of assets in a plurality of facilities. The system further comprises an apparatus communicatively coupled to one or more devices as described above. The apparatus is configured to manage the assets and determine a down-time in at least one of the plurality of facilities.

The object of the present invention is achieved by a computer-program product having machine-readable instructions stored therein, which when executed by a processor unit, cause the processor unit to perform a method as describe above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1A    is a flowchart illustrating stages in managing an asset through lifecycle of the asset, according to an embodiment of the present invention;

FIG 1B    is a flowchart illustrating a method of managing a technical system and a facility including the asset in FIG 1A, according to an embodiment of the present invention;

FIG 1C    is a flowchart illustrating a method of managing the asset in FIG 1A, according to an embodiment of the present invention;

FIG 2    illustrates a block diagram of an apparatus to manage an asset through lifecycle of the asset, according to an embodiment of the present invention;

FIG 3    illustrates a block diagram of a system to manage multiple assets, according to an embodiment of the present invention;

FIG 4    illustrates a block diagram of a device to manage a motor, according to an embodiment of the present invention;

FIG 5    illustrates a pictorial representation of the operation performed by the device in FIG 4;

FIG 6    is a schematic representation illustrating management of a vehicle, according to an embodiment of the present invention;

FIG 7    is a schematic representation illustrating management of a facility, according to an embodiment of the present invention;

FIG 8    is a graphical view illustrating remaining life of an automation unit in the facility of FIG 7, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

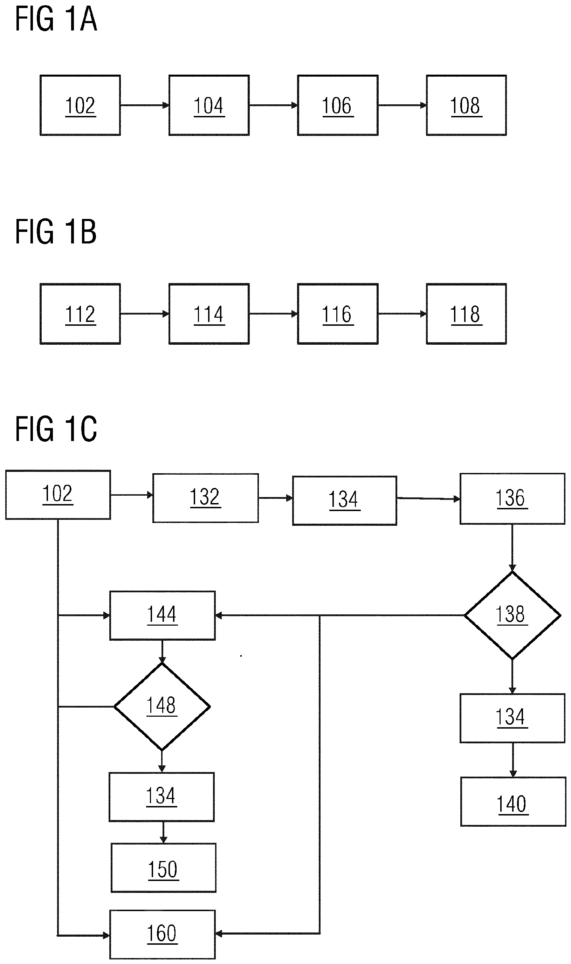

FIG 1A illustrates a flowchart of an embodiment of stages in managing an assets through lifecycle of the asset. The asset is located in a facility such as a technical installation. Such facility may be remotely located, for example, in an offshore location. The facility may be a complex industrial set-up with a plurality of assets. Each asset may function individually and/or in collaboration with other assets so as to ensure efficient functioning of the facility. Therefore, it is important to manage each asset in the facility for effective management of the facility.

In managing the asset, the method includes stage 102, sensor data associated with operation of the asset is received. The sensor data includes data from sensors such as temperature, pressure, vibration, sound, current, voltage, flux sensor. The sensor data also includes data from capturing devices such as cameras and thermal imaging devices. In an embodiment, the capturing devices are able to capture identification data associated with the asset. For example, name plate of a motor is read by a camera. In another embodiment, the asset does not have the identification data visible.

At stage 104, a validated profile for the asset is selected based on the sensor data from a set of profiles that are associable with the asset. The set of profiles comprises representations of the asset as a function of operation environment, operation profile and/or load profile associated with the asset. The profiles are validated using a digital twin of the asset. As used herein, the digital twin is configured to twin substantially similar operating conditions of the asset. The digital twin refers to parameter models of the operating parameters, prediction models of the asset based on the sensor data and historical sensor data of the asset. The digital twin is updated in real-time to ensure high-fidelity with the asset. The method of selecting the validated profile to manage the asset is disclosed in detail in FIG 1C.

At stage 106, an asset model is generated based on the validated profile. The validated profile is tuned based on the sensor data generated from the asset in real-time. Therefore, the asset model includes the validated profile and updated validated profile. In an embodiment, the asset model also includes a fault model of the asset. The fault model includes fault signatures, the operating parameters, interaction between one or more fault indications and predicted impact of the fault indications on the asset. The fault indications in the asset are identified based on a comparison between the validated profile and the sensor data received in real-time.

At stage 108, the asset is managed through lifecycle of the asset using the asset model. Lifecycle of the asset refers to the stages of manufacture, commissioning, operation, service and maintenance and end of life/recycle. The asset is managed in each of the stages using the asset model. For example, in the commissioning stage the asset model is used to instantiate the asset on a server. In another example, in the service stage, the asset model is used to track the asset in the facility.

FIG 1B is a flowchart illustrating a method of managing a technical system and the facility including the asset. Example technical system includes turbine, large drive, transformer, Magnetic Resonance Imaging (MRI) scanner, automobile, etc. the technical system maybe located in the facility, such as power plant, factory, grid and diagnostic center.

In managing the technical system and the facility, the method includes step 112 of determining an asset life comprising an asset remaining life based the asset model. To determine the asset life, validated remaining life for the validated profile is determined. The validated remaining life is determined by computing probability of survival of the asset for an additional interval of time $\Delta T$. With the execution of step 112, the asset model is updated with the validated remaining life.

At step 114, a remaining life of the technical system is determined based on the asset remaining life, availability of spare parts and serviceability parameters. Further, availability of spare parts is determined to ensure availability of the technical system. The remaining life of the technical system is determined by predicting availability of the technical system according to the below mathematical representation.

$$Availability = \frac{Operating\ time}{Operating\ time + Down\ time}$$

$$= \frac{Mean\ time\ between\ failures\ (MTBF)}{MTBF + Mean\ time\ to\ recover\ (MTTR)}$$

At step 116, a down-time for the facility is determined based on the asset remaining life or the remaining life of the technical system. The down-time of the facility is also determined based service support and the availability of replacements. When the asset is part of the technical system in the facility, the down-time is based on the asset remaining life and the remaining life of the technical system. In an embodiment, when a fault indication is identified in the asset, impact on performance of the asset and/or technical system is determined. Accordingly, the down-time of the facility is determined based on impact of the fault indication.

At step 118, a representative view of the asset or a portion of the asset is rendered on a display device. The representative view displays the asset remaining life, the remaining life of the technical system or the down-time of the facility is rendered. In an embodiment, the representative view includes a multi-dimensional view of the asset or the portion of the asset. In another embodiment, the representative view includes a usage view of the asset or the portion of the asset. The usage view is based on the fault model and depicts a real-time degradation and a predicted degradation of the asset or the asset portion.

In the method disclosed in FIG 1B, the role of the asset model in managing the asset, technical system and the facility is described. Further, the method of selecting the validated profile is pertinent to generation of the asset model. The method of selecting the validated profile is disclosed in FIG 1C.

FIG 1C is a flowchart illustrating a method of managing the asset. The method begins with stage 102 of FIG 1A. As stated in FIG 1A, the sensor data associated with the asset is received at stage 102.

At step 132, a set of profiles are generated for the asset. The set of profiles comprises representations of the asset as a function of operation environment, operation profile or load profile associated with the asset. In an embodiment, the set of profiles are generated based on historical operation profile of the asset. In another embodiment, the set of profiles are generated based on a fleet profile associated with a fleet of the asset.

At step 134, the set of profiles are validated to determine one or more validated profiles associable with the asset. The profiles are validated using the digital twin of the asset. Step 134 may be performed after step 138. In an embodiment, steps 136 to 160 are performed as sub-steps of the step 134. The below steps are described considering that the step 134 is performed after step 138.

At step 136, a profile variation for each of the set of profiles is determined by comparing asset profile and sensor profiles of the plurality of sensors. As used herein "asset profile" refers to the sensor data, operation profile of the asset and load profile of the asset. Further, "sensor profile" refers to sensor parameters such as sensor sensitivity and sensor boundary conditions. In an embodiment, the asset profile refers to real-time sensor data received from the sensors and the sensor profile refers to virtual sensor data generated based on the digital twin of the asset.

At step 138, the profiles whose profile variation is within a predetermined variability threshold are identified. If the profile variation is within the variability threshold the profiles are validated at step 134. The profiles within the threshold are further validated using a digital twin graph. The digital twin graph includes multiple graphical models of the operating parameters, load profile, etc. For example, the digital twin graph may include ontology models having ontological data of the asset, prediction models with probabilistic data associated with condition based probability and meta models. The meta models are simplified high-fidelity digital twins of the asset. The meta model preserves essential behavior and dominant effects for the purpose of reducing solution time or storage capacity required for a complex digital twin. Further, validated remaining life for the validated profiles are also determined. At step 140, the validated profile with least profile variation is selected from the validated profiles.

If the profile variation is not within the threshold, step 144 or step 160 is performed. At step 144, similarity coefficient is determined by comparing the sensor data and the set of profiles associable with the asset. In an embodiment, the similarity coefficient is determined by cosine similarity and Jaccard similarity. The cosine similarity generates a geometric interpretation and the Jaccard similarity determines proportion of common data between the sensor data and the profiles. At step 148, the profiles within a similarity threshold are identified and validated at step 134. At step 150, the validated profile with highest similarity coefficient is selected.

At step 160, the validated profile can be determined directly from the sensor data by using one of supervised learning technique and unsupervised learning technique. In an embodiment, the supervised learning techniques and unsupervised learning techniques implemented in the digital twin graph of the asset.

As shown in FIG 1C, there are multiple steps 132, 144 and 160 that can be performed separately or in combination to select the validated profile for the asset.

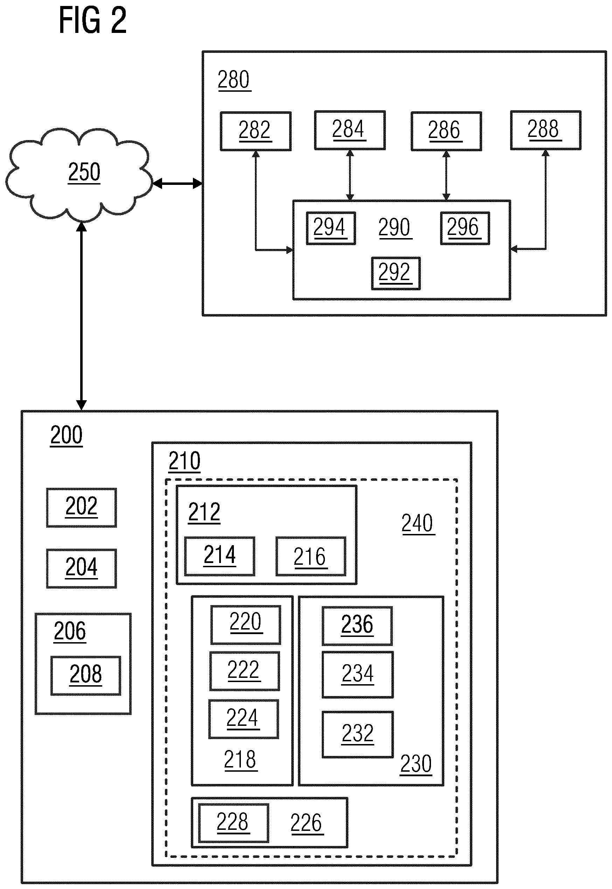

FIG 2 illustrates a block diagram of an apparatus 200 to manage an asset 280. The asset includes industrial assets that are located in an industrial plant or an industrial facility. The asset also includes machinery in a technical system. Examples of an asset include motor, rotor, transformer, gearbox, gear-drive, bearing, magnet, coil etc.

The asset 280 is associated multiple sensors 282, 284, 286, and 288 that measure operation parameters of the asset 280. The term "operation parameter" refers to one or more characteristics of the asset. For example, if a motor in an electric vehicle is the asset, the operation parameters include vibration frequency, vibration amplitude, engine temperature, etc. Further, the asset 280 includes a controller 290 with a trans-receiver 292 capable of connecting to a network interface 250.

In an embodiment, the controller 290 receives sensor data from the sensors 282-288 and transmits the sensor data to the apparatus 200 via the network interface 250. In another embodiment, the controller 290 performs the functions of the apparatus 200. The controller 290 comprises a processor 294 and a memory 296 comprising modules in the apparatus 200, specifically modules 224, 232, 234, 236 and 238.

The apparatus 200 includes a communication unit 202, at least one processor 204, a display 206, a Graphical User Interface (GUI) 208 and a memory 210. The communication unit 202 includes a transmitter, a receiver and Gigabit Ethernet port. The memory 210 may include 2 Giga byte Random Access Memory (RAM) Package on Package (PoP) stacked and Flash Storage. The memory 210 is provided with modules stored in the form of computer readable instructions, for example, 212, 218, 226, and 230. The modules are collectively referred to as asset module 240. The processor 204 is configured to execute the defined computer program instructions in the modules. Further, the processor 204 is configured to execute the instructions in the memory 210 simultaneously. The display 206 includes a High-Definition Multimedia Interface (HDMI) display 206 and a cooling fan (not shown in the figure).

According to an embodiment of the present invention, the apparatus 200 is configured on a cloud computing based platform implemented as a service for analyzing data. Additionally, control personnel can access the apparatus 200 via the GUI 208. The GUI 208 is, for example, an online web interface, a web based downloadable application interface, etc.

The memory includes a simulation module 212, a mapping module 218, a model generator module 226 and a management module 230. The following description explains operation of the modules when executed by the processor 204.

The simulation module 212 includes a digital twin module 214 and a profile module 216. The digital twin module 214 is configured to generate a digital twin graph for the asset 280. The digital twin graph includes multiple graphical models of the operating parameters, load profile, etc. Further, the digital twin module may include ontology model having ontological data of the asset and prediction model of the asset. The ontology model includes nodes that define a set of relationships between the sensors 282, 284, 286 and 288. The prediction model includes one or more nodes to integrate the sensor data from the sensors 282-288 into probabilistic models. The probabilistic model enables probabilistic reasoning and causal exploration of the sensor data.

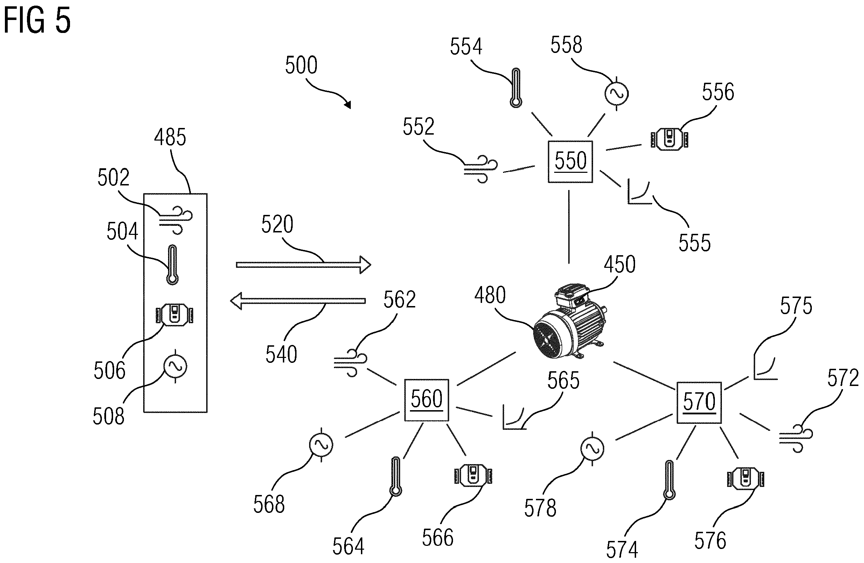

The profile generation module 216 employs the digital twin graph to generate a set of profiles associable with the asset. The set of profiles include representations of the asset as a function of at least one of operation environment, operation profile and load profile associated with the asset. The graphical representation of the operation performed by the profile generation module 216 is illustrated in FIG 5.

The mapping module 218 determines the similarity between each of the set of profiles and the sensor data. The similarity is determined by means of a variation module 220, a similarity module 222 and a learning module 224.

The variation module 220 determines a profile variation for set of profiles by comparing asset profile and sensor profiles of the plurality of sensors. The asset profile includes the sensor data that is captured in real-time. Accordingly, the sensor data is compared with the sensor profiles generated by means of the digital twin graph. The variation module 220 identifies one or more validated profiles whose profile variation is within a predetermined variability threshold. In an embodiment, the predetermined variability threshold is learnt based on sensor boundary condition of the sensors 282-288. The variation module 220 selects the validated profile with least profile variation.

In an embodiment, the variation module 220 employs the similarity module 222 to select the validated profile with least profile variation. The similarity module 222 defines a geometric interpretation based on angle associated similarity between the sensor data from the asset 280 and the set of profiles. In an embodiment, the geometric interpretation is determined by cosine similarity and is represented mathematically by

$$sim_{cos}(x_{sensor\ data}, x_{DTG}) = \frac{< x_{sensor\ data}, x_{DTG} >}{\|x_{sensor\ data}\|_2, \| x_{DTG}\|_2}$$

Where DTG refers to the validated profiles generated by digital twin graph.

Further, the similarity module 222 determines a similarity co-efficient by comparing the sensor data and the validated profiles for the asset proportion. The similarity coefficient is a measure of common data between the sensor data and the validated profiles. In an embodiment, the similarity co-efficient is determined by Jaccard similarity and is mathematically represented by

$$sim_{jaccard}(x_{sensor\ data}, x_{DTG}) = \frac{|x_{sensor\ data} \cap x_{DTG}|}{|x_{sensor\ data} \cup x_{DTG}|}$$

Where DTG refers to the validated profiles generated by digital twin graph.

The validated profile with highest similarity co-efficient is selected.

The learning module 224 is used separately and in conjunction with the variability module 220 and the similarity module 222 to select the validated profile. The learning module 224 includes a combination of supervised and unsupervised learning algorithms. For example, algorithms include Bayesian algorithms, K-nearest neighbour algorithm, Neural Networks, etc.

The model generator module 226 generates the asset model from the validated profile. The validated profile is tuned based on the sensor data generated from the asset in real-time to generate the asset model. The model generator module 226 also includes a fault generator module 228. The fault generator module 228 generates a fault model of the asset including fault signatures, the operating parameters, interaction between one or more fault indications and predicted impact of the fault indications on the asset.

The management module 230 uses the asset model and the fault model to instantiate, track and estimate life of the asset. The management module 230 includes an instantiating module 232, a tracking module 234 and a life module 236. The instantiating module 232 is configured to instantiate the asset on a server using the asset module. This is advantageous when no asset details or incomplete asset details are available. The tracking module 234 is configured track the asset 280 through its life-cycle. If the asset details are lost during service, then the asset model is used to track the asset 280. The life module 236 determines life of the asset 280 using the asset model. The asset life is based on the life associated with the validated profile used to generate the asset model. The life of the validated profile is updated with the real-time sensor data. The asset life includes remaining life of the asset 280.

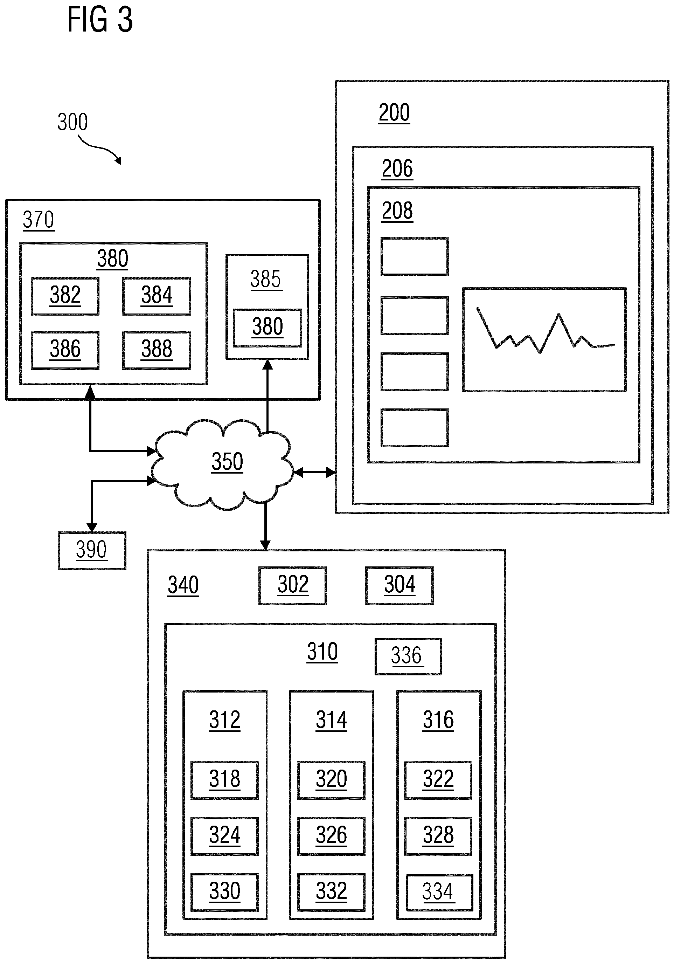

FIG 3 illustrates a block diagram of a system 300 to manage multiple assets 380. The system 300 includes a server 340, a network interface 350 communicatively coupled to the server. In an embodiment, the asset 380 includes sensors 382, 384, 386 and 388 to monitor operation of the asset 380. In another embodiment, the asset 380 is part of a technical system 385. In yet another embodiment, the asset 380 and the technical system 385 are located in a facility 370. The system 300 also includes the apparatus 200 communicatively coupled to the server 340. The operation of the apparatus 200 has been elaborated in FIG 2.

The server 340 includes a communication unit 302, one or more processing units 304 and a memory 310. The memory 310 is configured to store computer program instructions defined by modules, for example, simulation module 312. In an embodiment, server 340 can also be implemented on a cloud computing environment, where computing resources are delivered as a service over the network 350.

As used herein, "cloud computing environment" refers to a processing environment comprising configurable computing physical and logical resources, for example, networks, servers, storage, applications, services, etc., and data distributed over the network 350, for example, the internet. The cloud computing environment provides on-demand network access to a shared pool of the configurable computing physical and logical resources. The network 350 is, for example, a wired network, a wireless network, a communication network, or a network formed from any combination of these networks.

The processing units 304 in the server 340 execute the following modules: a simulation module 312, a life module 314, an availability module 316, and a maintenance module 336.

The simulation module 312 is configured to generate digital twin graph of the assets 380, the technical system 385 and the facility 370. Therefore, the digital twin graph is configured to replicate substantially similar operating conditions of the assets 380, the technical system 385 and the facility 370. The simulation module 312 includes asset simulation module 318 configured to simulate each of the assets 380. For example, the instructions in the asset simulation module 318 include instructions of the asset module 240. Accordingly, the simulation module 312 is configured to manage the asset 380 throughout its lifecycle.

Apart from the simulation of the asset, the simulation module 312 includes a system simulation module 324 of the technical system 385 and a facility simulation module 330 of the facility 370. The system simulation module 324 includes 1-dimensional and/or 3-dimensional simulation of the asset 380 and the interaction between the asset 380 and other components (not shown in FIG. 3) within the technical system 385. Similarly, the facility simulation module 330 includes simulation of the technical system 385 and the assets 380 with their interactions in the facility simulation 370.

The life module 314 includes asset life module 320, fleet life module 326, and system life module 332. On executing the asset life module 320, the asset life is determined in a similar manner as that of the life module 236. The fleet life module 326 is configured to determine a fleet life of the assets 380 based on the asset remaining life and a fleet variability factor. The fleet variability factor refers to variation in the assets 380 including variation in operation environment associated with each of the assets 380, operation profile of each of the assets 380 and load profile of each of the assets 380.

The system life module 332 is configured to determine a remaining life of the technical system 385 comprising the asset 380. The system life module 332 determines the remaining life based on the asset remaining life, availability of spare parts and serviceability parameters. The serviceability parameters include parameters associated serviceability of the asset 380 and the technical system 385. For example, time required for serviceability, availability of service personnel, type of service, frequency of service, etc.

The availability module 316 includes asset availability module 322, system availability module 328 and facility availability module 334. The asset availability module 322 predicts availability of the asset 380 based on the asset remaining life and the serviceability parameters. The system availability module 328 determines availability of the technical system 385 based on the asset availability and the remaining life of the technical system 385. Further, the facility availability module 334 predicts a down-time for the facility 370 based on the asset remaining life and/or the remaining life of the technical system 385.

The maintenance module 336 is configured to determine a third party maintenance centre 390 that is capable of providing service and maintenance to the asset 380, system 385 and facility 370. The maintenance centre 390 is determined such that the availability of the asset 380, system 385 and the facility 370 is optimized.

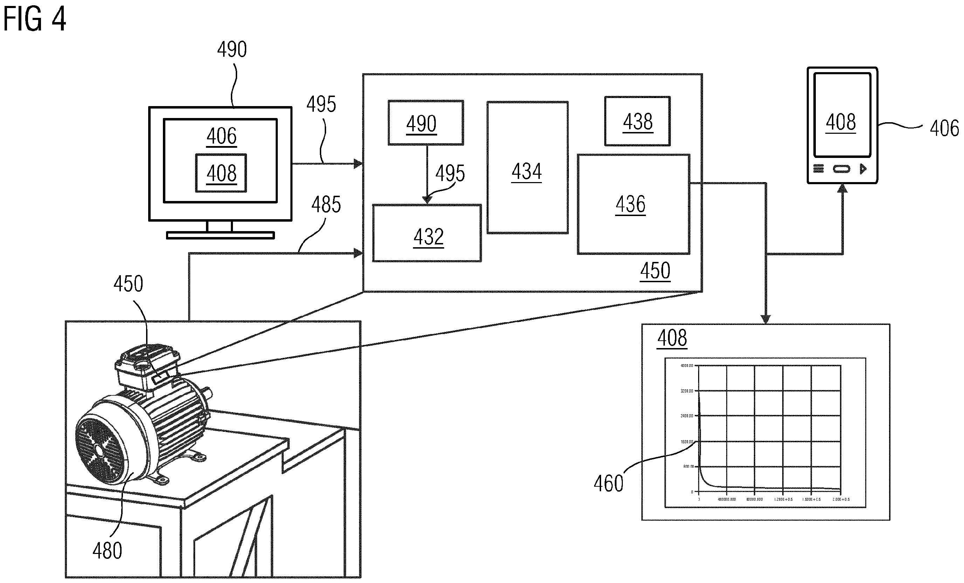

FIG 4 illustrates a block diagram of a device 450 to manage a motor 480 according an embodiment of the present invention. The motor 480 includes sensors such as a vibration sensor and a thermostat (not shown in FIG. 4). The device 450 includes a processor and a memory (not shown in FIG. 4). The memory includes modules 432, 434, 436 and 438. It will be appreciated by a person skilled in the art that the operation of the device 450 is similar to apparatus 200.

Further, FIG 4 illustrates a simulation platform 490 connected a display device 406. In an embodiment, the display device 406 is part of the simulation platform 490. In another embodiment, the display device 406 is a mobile computing device with a screen. The display device 406 is provided with a Graphical User Interface (GUI) 408 to enable management of the motor 480 through its lifecycle. In an embodiment, the GUI is used to render and analyse faults identified in the motor 480.

The device 450 is placed on the motor 480 or in close proximity. As shown in the figure, sensor data 485 is generated sensors associated with the motor 480. The sensor data indicates real-time condition of the motor 480.

The simulation platform 490 includes a digital twin of the motor 480. A virtual response 495 is generated by means of the digital twin in the simulation platform 490. In an embodiment, the simulation platform 490 is in the device 450 and includes a digital twin graph of the motor 480. The virtual response 495 includes a set of motor profiles associable with the motor 480.

The motor profiles 495 and the sensor data 485 are received by a profile module 432 that selects a validated motor profile for the motor 480. The validated motor profile is used by a model generator module 434 to generate a motor model for the motor 480. A life module 438 is used to determine the remaining life of the motor based on the validated motor profile. In an embodiment, the life module 438 determines a profile life for each of the motor profiles 495 including the validated motor profile.

In another embodiment, the life module 438 determines a mean remaining life of the motor 480. The mean remaining life 460 for the motor 480 at age t is determined mathematically by

$$MRL(t) = \int_0^\infty R(\tau|t)d\tau = \frac{1}{R(t)} \int_t^\infty R(\tau)d\tau$$

Where R is the conditional reliability function at age t and where $\tau$ is a probability of the motor 480 surviving an additional interval of time.

The motor model is used by a management module 436 to manage the motor 480 throughout its lifecycle. The management module 436 is configured to instantiate the motor 480 on a remote server. Further, the management module 436 is configured to track the motor 480 through all the stages of operation from 'as good as new' to 'as bad as old' . In an embodiment, the management module 436 renders the mean remaining life 460 on the GUI 408.

FIG 5 illustrates a pictorial representation of the operation performed by the device 450. The sensor data 485 from the motor 480 is represented individually as flux 502, temperature 504, vibration 506 and current 508. The sensor data 485 is provided to the device 450 indicated by arrow 520. The device 450 is configured to generate multiple motor profiles 550, 560 and 570 associable to the motor 480 based on the sensor data 485.

Each motor profile 550, 560 and 570 include sensor profile and remaining life estimate. For example, motor profile 550 has representations for flux 552, temperature 554, vibration 556, current 558 and remaining life estimate 555. Similarly, the motor profile 560 includes representations for flux 562, temperature 564, vibration 566, current 568 and remaining life estimate 565. Further, the motor profile 570 includes representations for flux 572, temperature 574, vibration 576, current 578 and remaining life estimate 575. A motor profile most suitable to the sensor data 485 and the motor 480 is selected and fine-tuned at step 540.

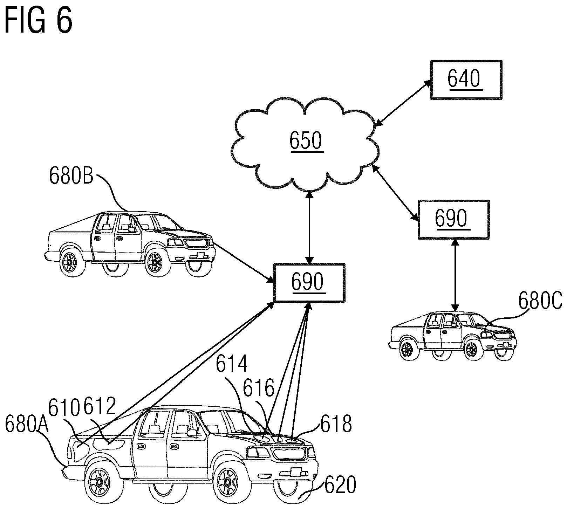

FIG 6 is a schematic representation illustrating management of vehicles 680A-C employing the device 690. In FIG 6, the vehicles 680A-C may be non-electric vehicles, electric vehicles or hybrid vehicles (combination of electric vehicle and non-electric vehicle). An electric vehicle is used herein to describe any remote system configured to be charged electrically, an example of which is a vehicle that includes, as part of its locomotion capabilities, electrical power derived from a chargeable energy storage device such as one or more rechargeable electro-chemical cells, etc. As non-limiting examples, some electric vehicles may be hybrid electric vehicles that include besides electric motors, a traditional combustion engine for direct locomotion or to charge the vehicle's battery. Other electric vehicles may draw all locomotion ability from electrical power. An electric vehicle is not limited to an automobile and may include motorcycles, carts, scooters, and the like. By way of example and not limitation, a remote system is described herein in the form of an electric vehicle. Furthermore, other remote systems that may be at least partially powered using a chargeable energy storage device are also contemplated.

The components in the vehicles 680 include charger 610, battery 612, engine 614, power electronics 616, motor 618 and wheel 620. The operation of the components is monitored using sensors (not shown in FIG 6). The sensors associated with the components are communicatively coupled to a device 690 associated with each vehicle 680. The device 690 is provided on each vehicle 680 at a dashboard. The device 690 communicates with a server 640 through a network 650.

The device 690 is configured to generate vehicle models associated with each of the vehicles 680A-C. The vehicle models are generated from on a set of vehicle profiles associated with the vehicles 680A-C. In an embodiment, the server 640 is configured to generate the set of vehicle profiles based on the sensors associated with the components such as charger 610, battery 612, engine 614, power electronics 616, motor 618 and wheel 620. For example, the server 640 generates the set of vehicle profile for each of the vehicle 680A, 680B and 680C individually. In another example, the server 640 generates the set of profiles for the vehicle 680A and modifies the set of profiles for vehicles 680B and 680C. Accordingly, the server 640 includes a profile module to generate the set of profiles.

In another embodiment, the device 690 includes the profile module to generate the set of vehicle profiles for the vehicle 680A. The set of vehicle profiles are used by the server 640 to generate the set of vehicle profiles for vehicles 680B and 680C.

A validated vehicle profile is selected from the set of profiles by performing the method disclosed in FIG 1C. Accordingly, the profile module selects a validated vehicle profile for the vehicle 680A. The validated motor profile is used by a model generator module to generate the vehicle model for the vehicle 680. A life module is used to determine the remaining life of the vehicle based on the validated vehicle profile.

In an embodiment, the vehicle profiles are generated based on combination of component profiles generated for each of the components charger 610, battery 612, engine 614, power electronics 616, motor 618 and wheel 620. Further, the vehicle model is based on component models generated from the component profiles. Accordingly, the method disclosed in FIG 1A-1C is applied to each of the components to generate the vehicle model. Furthermore, life of each component is estimated to estimate life of the vehicle 680A.

The present invention is advantageous as the device 690 enable a user to track the life expended and the remaining life in hours based on usage of the vehicle 680A. Accordingly, the life estimation is not limited as a metric of Kilometre. Rather the remaining life is estimated in terms of stress due to acceleration, high speeds, sudden brakes etc. that the vehicle 680A has undergone. Further, tracking of the vehicle 680A will enable fleet owners to remotely manage fleet of vehicle 680A-680C to ensure optimum maintenance and service of each vehicle 680A-680C and its components.

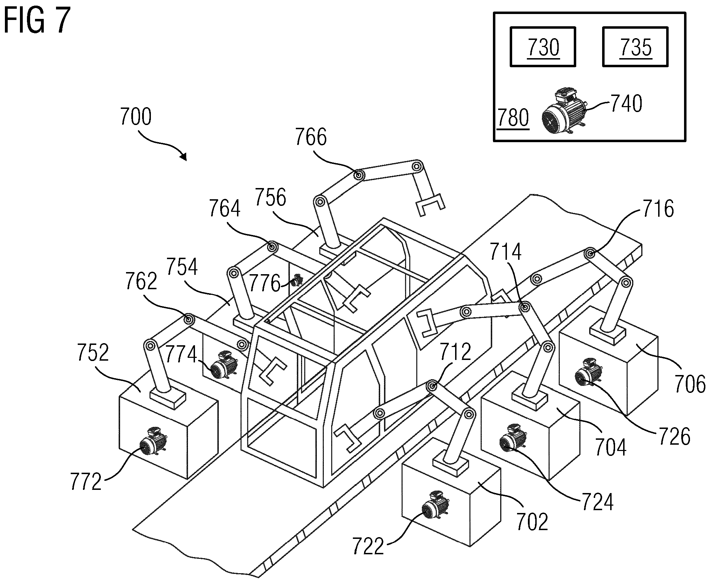

FIG 7 is a schematic representation illustrating management of a facility 700 according to the present invention. The facility 700 includes a plurality of automation units 702, 704, 706 and 752, 754, 756. Each of the automation units 702, 704, 706 include bearings 712, 714, 716 and motors 722, 724, 726 respectively. Similarly, the automation units 752, 754, 756 include bearings 762, 764, 766 and motors 772, 774, 776 respectively. Further, the facility 700 includes an inventory 780 include spare bearing 730, 735 and spare motor 740.

The methods in FIG 1A-1C are executed to determine the down-time for the facility 700 by determining remaining life for the automation units, bearings and motors.

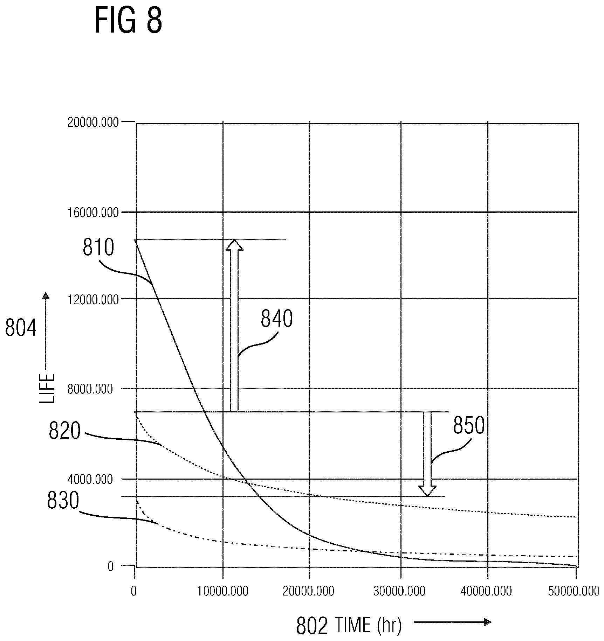

FIG 8 is a graphical view depicting remaining life of the automation unit 702 in the facility 700. The x-axis indicates time 802 as a measure of hours and the y-axis indicates life 804 as a measure of cycles to failure. The remaining life is indicated as life trends 810, 820 and 830. The life trends 810, 820 and 830 are predicted based on operation of the automation unit 702, the bearing 712 and motor 722.

For example, the bearing 712 fails and is removed from the automation unit 702 for repair. The bearing 712 is replaced by a bearing 730, which is "as good as new". The bearing 730 is not trackable as it is not instantiated on a facility monitoring system. Therefore, the facility monitoring system executes the methods in FIG 1A-C to determine remaining life of the bearing 730. Further, life trend of the automation unit 702 is predicted to show improvement in remaining life, as indicated by the arrow 840.

In another example, the motor 722 is replaced by motor 740. The motor 740 was previous used in the automation unit 704 in place of motor 724. After service, the motor 740 is placed in the inventory 780. Motor model of the motor 740 is generated and used to determine remaining life of the motor 740. Further, remaining life of the automation unit 702 is determined after the replacement. The motor model for the motor 740 maps the motor life to "as bad as old". The method of determining the motor life is elaborated in FIG. 5. Based on the motor life, the life trend of the automation unit 702 changes from 820 to 830 and is indicated by arrow 850. Accordingly, a facility manager is intimated that the motor 740 may lead to failure of automation unit 702. It will be appreciated by a person skilled in the art that a system as disclosed in FIG 3 is provided in the facility 700 as the facility management system. It will be further appreciated that the present invention discloses a method of tracking and estimating life of the motor 740 at any instant, without prior details of remaining life of the motor 740.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

List of reference numerals

FIG 2

apparatus 200
communication unit 202
processor 204
display 206
Graphical User Interface (GUI) 208 memory 210
simulation module 212
digital twin module 214
profile module 216
mapping module 218
variation module 220
similarity module 222
learning module 224
model generator module 226
fault generator module 228
management module 230
instantiating module 232
tracking module 234
life module 236
asset module 240
network interface 250
asset 280
sensors 282, 284, 286, and 288
controller 290
trans-receiver 292
processor 294
memory 296

FIG 3

system 300
communication unit 302
processing units 304
memory 310
simulation module 312
life module 314
availability module 316

asset simulation module 318
asset life module 320
asset availability module 322
system simulation module 324
fleet life module 326
system availability module 328
facility simulation module 330
system life module 332
facility availability module 334
maintenance module 336
server 340
network interface 350
facility 370
assets 380
technical system 385
sensors 382, 384, 386 and 388
maintenance module 336.
third party maintenance centre 390

FIG 4

display device 406
GUI 408
profile module 432
model generator module 434
management module 436
life module 438
device 450
remaining life 460
motor 480
sensor data 485
simulation platform 490
virtual response 495

FIG 5

flux 502
temperature 504
vibration 506
current 508
arrow 520, 540
motor profiles 550, 560 and 570
flux 552, 562 and 572
temperature 554, 564 and 574
vibration 556, 566 and 576
current 558, 568 and 578
remaining life estimate 555, 565 and 575

FIG 6

vehicles 680A-C
device 690
charger 610
battery 612
engine 614
power electronics 616
motor 618
wheel 620

server 640
network 650

FIG 7

facility 700
automation units 702, 704, 706 and 752, 754, 756
bearings 712, 714, 716
motors 722, 724, 726
inventory 780
spare bearing 730, 735
spare motor 740.

FIG 8

Time 802
Life 804
life trends 810, 820 and 830
arrow 840, 850

**Claims**

1. A method of managing assets (280) throughout their life-cycle, the method comprising:

   obtaining sensor data from a plurality of sensors (282, 284, 286, 288) associated with operation of the asset (280) and operation environment associated with the asset (280), wherein the sensor data are condition data as a measure of operating parameters associated with an operation of the asset, wherein assets include any machinery in a technical system or technical installation/facility such as motor, gear, bearing, shaft, switchgear, rotor, circuit breaker, protection devices, remote terminal units, transformers, reactors, disconnectors, gear-drive, gradient coils, magnet, radio frequency coils, wherein technical systems include electric vehicle, automation units, turbines, large drives, Magnetic Resonance Imaging (MRI) scanner, and wherein the sensor data comprise data from sensors such as temperature, pressure, vibration, sound, current, voltage, flux sensor;
   generating a set of sensor profiles for the asset (280) by a digital twin of the asset, wherein the digital twin is configured to twin substantially similar operating conditions of the asset, wherein the digital twin refers to parameter models of the operating parameters, prediction models of the asset based on the sensor data and historical sensor data of the asset, wherein the sensor profiles refer to virtual sensor data generated based on the digital twin of the asset, wherein the set of sensor profiles comprises representations of the asset (280) as a function of at least one operation environment associated with the asset (280);
   determining a profile variation for the set of sensor profiles associable to the asset (280), wherein the profile variation is determined by comparing an asset profile of the asset (280) and the sensor profiles of the plurality of sensors, wherein the asset profile includes sensor data that is captured in real-time, and wherein the asset profile refers to an operation profile of the asset and a load profile of the asset;
   validating the set of sensor profiles based on a comparison of the asset profile and the sensor profiles generated by the digital twin of the asset (280), wherein the validating of the set of sensor profiles is conducted by determining the profile variation for each of the set of sensor profiles, wherein the profile variation is determined by comparing the asset profile and the sensor profiles;
   identifying one or more validated sensor profiles whose profile variation is within a predetermined variability threshold;
   determining at least one validated sensor profile for the asset (280) from the set of validated sensor profiles based on the sensor data by identifying one or more validated sensor profiles whose profile variation is within the predetermined variability threshold, and by selecting the at least one validated sensor profile with least profile variation, wherein selecting the at least one validated sensor profile with least profile variation, comprises:

      computing similarity co-efficient by comparing the sensor data of the asset profile and the validated sensor profiles for the asset (280), and wherein the similarity co-efficient is determined by cosine similarity and Jaccard similarity; and
      selecting at least one validated sensor profile for the asset (280) based on the similarity co-efficient;

generating an asset model for the asset (280) based on the at least one validated sensor profile associated with the asset (280), wherein the asset model comprises an asset life, a fault model, operating parameters and a predicted impact of a fault of the asset on the asset life, wherein the sensor profile refers to sensor parameters such as sensor sensitivity and sensor boundary conditions, wherein generating the asset model for the asset (280) based on the at least one validated sensor profile associated with the asset (280), comprises:

generating the fault model representing the operation profile using fault signatures of one or more fault indications, wherein the one or more fault indications are detected in the sensor data based on comparison with the at least one validated sensor profile, and wherein the fault signatures refer to electronic footprints of the fault indications in the asset, wherein the fault signatures contain information regarding various health status conditions of the asset; and

updating the asset model with the fault model;

determining validated remaining life for the at least one validated sensor profile by computing a probability of survival of the asset for an additional interval of time based on the asset model and the fault model;

updating the asset model with validated remaining life of the at least one validated sensor profile;

determining an asset life comprising an asset remaining life based on the asset model, wherein the asset life includes asset remaining life, remaining useful life (RUL), down-time, maintenance time, and wherein the asset life is based on the life associated with the validated sensor profile used to generate the asset model; and

managing the asset (280) using the asset model through the life-cycle of the asset (280), wherein the managing of the asset comprises removing the asset from a manufacturing line of an industrial system and taking the asset for maintenance based on the determined maintenance time.

2. The method according to claim 1, further comprising:
determining a remaining life of a technical system (385) comprising the asset (280, 380) based on the asset remaining life, availability of spare parts, and serviceability parameters.

3. The method according to claim 1 or claim 2, further comprising:
predicting a down-time for a facility (370) in which the asset (280, 380) is located based on at least one of the asset remaining life and the remaining life of the technical system (385).

4. The method according to claim 1, further comprising:
selecting the at least one validated sensor profile using one of supervised learning technique and unsupervised learning technique.

5. The method according to claim 1, further comprising:

estimating an expended life of the asset (280) based on the asset model;
rendering a usage profile of the asset (280) based on the expended life; and
predicting the asset life based on the expended life.

6. The method according to claim 1, wherein managing the asset (280) using the asset model through the life-cycle of the asset (280) comprises:
detecting one or more faults in the asset (280) based on the asset model.

7. The method according to claim 1, wherein managing the asset (280) using the asset model through the life-cycle of the asset (280) comprises:
instantiating the asset (280) on an asset management system based on the asset model when the asset (280) is not recognizable by the asset management system.

8. The method according to claim 1, wherein managing the asset (280) using the asset model through the life-cycle of the asset (280) comprises:
tracking the asset (280) through the life-cycle of the asset (280) by generating the asset model in real-time.

9. An apparatus (200) for managing an asset (280) through life-cycle of the asset (280), the system comprising:

one or more processing units (204); and
a memory unit (210) communicative coupled to the one or more processing units (204), wherein the memory unit (210) comprises an asset module (280) stored in the form of machine-readable instructions executable by the one or more processing units (204), wherein the asset module (280) is configured to perform one or more method steps according to claims 1 to 8.

**10.** A system (300) comprising:

one or more devices capable of providing condition data associated with operation of assets (380) in a plurality of facilities (370); and

an apparatus (200) according to claim 9, communicatively coupled to the one or more devices, wherein the apparatus is configured for managing the assets (380) and determining a down-time in at least one of the plurality of facilities.

**11.** A computer-program product having machine-readable instructions stored therein, which when executed by one or more processing units (204), cause the one or more processing units (204) to perform a method according to claims 1 to 8.

## Patentansprüche

**1.** Verfahren zum Verwalten von Bauteilen (280) über ihre Lebensdauer hinweg, wobei das Verfahren Folgendes umfasst:

Erhalten von Sensordaten von mehreren Sensoren (282, 284, 286, 288), die mit dem Betrieb des Bauteils (280) und der mit dem Bauteil (280) assoziierten Betriebsumgebung assoziiert sind, wobei es sich bei den Sensordaten um Bedingungsdaten als Maß von mit einem Betrieb des Bauteils assoziierten Betriebsparametern handelt, wobei zu Bauteilen jegliche Maschinenelemente in einem technischen System oder einer technischen Installation/Anlage gehören, wie etwa Motor, Zahnrad, Lager, Welle, Schaltanlage, Rotor, Leistungsschalter, Schutzvorrichtungen, Fernbedienungsterminals, Transformatoren, Reaktoren, Trennschalter, Zahnradantrieb, Gradientenspulen, Magnet, Hochfrequenzspulen gehören, wobei zu technischen Systemen Elektrofahrzeuge, Automatisierungseinheiten, Turbinen, große Antriebseinrichtungen, Magnetresonanztomographie(MRT)-Scanner gehören und wobei die Sensordaten Daten von Sensoren wie Temperatur-, Druck-, Vibrations-, Schall-, Strom-, Spannungs-, Flusssensoren umfassen;

Erzeugen eines Satzes von Sensorprofilen für das Bauteil (280) durch einen digitalen Zwilling des Bauteils, wobei der digitale Zwilling dazu ausgelegt ist, im Wesentlichen ähnliche Betriebsbedingungen des Bauteils nachzuahmen, wobei sich der digitale Zwilling auf Parametermodelle der Betriebsparameter, Vorhersagemodelle des Bauteils basierend auf den Sensordaten und historische Sensordaten des Bauteils bezieht, wobei sich die Sensorprofile auf basierend auf dem digitalen Zwilling des Bauteils erzeugte virtuelle Sensordaten beziehen, wobei der Satz von Sensorprofilen Repräsentationen des Bauteils (280) als Funktion mindestens einer mit dem Bauteil (280) assoziierten Betriebsumgebung umfasst;

Bestimmen einer Profilvariation für den Satz von Sensorprofilen, die sich mit dem Bauteil (280) assoziieren lässt, wobei die Profilvariation durch Vergleichen eines Bauteilprofils des Bauteils (280) und des Sensorprofils der mehreren Sensoren bestimmt wird, wobei das Bauteilprofil Sensordaten beinhaltet, die in Echtzeit erfasst werden, und wobei sich das Bauteilprofil auf ein Betriebsprofil des Bauteils und ein Lastprofil des Bauteils bezieht;

Validieren des Satzes von Sensorprofilen basierend auf einem Vergleich des Bauteilprofils und der durch den digitalen Zwilling des Bauteils (280) erzeugten Sensorprofile, wobei das Validieren des Satzes von Sensorprofilen durch Bestimmen der Profilvariation für jedes des Satzes von Sensorprofilen durchgeführt wird, wobei die Profilvariation durch Vergleichen des Bauteilprofils und der Sensorprofile bestimmt wird;

Identifizieren eines oder mehrerer validierter Sensorprofile, deren Profilvariation innerhalb einer vorbestimmten Variabilitätsschwelle liegt;

Bestimmen mindestens eines validierten Sensorprofils für das Bauteil (280) aus dem Satz von validierten Sensorprofilen basierend auf den Sensordaten durch Identifizieren eines oder mehrerer validierter Sensorprofile, deren Profilvariation innerhalb der vorbestimmten Variabilitätsschwelle liegt, und durch Auswählen des mindestens einen validierten Sensorprofils mit einer geringsten Profilvariation, wobei das Auswählen des mindestens einen validierten Sensorprofils mit der geringsten Profilvariation Folgendes umfasst:

Berechnen eines Ähnlichkeitskoeffizienten durch Vergleichen der Sensordaten des Bauteilprofils und der validierten Sensorprofile für das Bauteil (280), und wobei der Ähnlichkeitskoeffizient mittels Kosinus-Ähnlichkeit und Jaccard-Ähnlichkeit bestimmt wird; und

Auswählen mindestens eines validierten Sensorprofils für das Bauteil (280) basierend auf dem Ähnlichkeitskoeffizienten;

Erzeugen eines Bauteilmodells für das Bauteil (280) basierend auf dem mindestens einen mit dem Bauteil (280) assoziierten validierten Sensorprofil, wobei das Bauteilmodell eine Bauteillebensdauer, ein Fehlermodell, Betriebsparameter und eine vorhergesagte Auswirkung eines Fehlers des Bauteils auf die Bauteillebensdauer umfasst, wobei sich das Sensorprofil auf Sensorparameter wie Sensorempfindlichkeit und Sensorgrenzbedingungen bezieht, wobei das Erzeugen des Bauteilmodells für das Bauteil (280) basierend auf dem mindestens einen mit dem Bauteil (280) assoziierten validierten Sensorprofil Folgendes umfasst:

Erzeugen des das Betriebsprofil repräsentierenden Fehlermodells unter Verwendung von Fehlersignaturen einer oder mehrerer Fehlerangaben, wobei die eine oder die mehreren Fehlerangaben in den Sensordaten basierend auf einem Vergleich mit dem mindestens einen validierten Sensorprofil detektiert werden und wobei sich die Fehlersignaturen auf elektronische Fußabdrücke der Fehlerangaben in dem Bauteil beziehen, wobei die Fehlersignaturen Informationen bezüglich verschiedener Gesundheitszustandsbedingungen des Bauteils enthalten; und

Aktualisieren des Bauteilmodells mit dem Fehlermodell;

Bestimmen einer validierten Restlebensdauer für das mindestens eine validierte Sensorprofil durch Berechnen einer Wahrscheinlichkeit eines Überlebens des Bauteils für eine zusätzliche Zeitdauer basierend auf dem Bauteilmodell und dem Fehlermodell;

Aktualisieren des Bauteilmodells mit der validierten Restlebensdauer des mindestens einen validierten Sensorprofils; Bestimmen einer Bauteillebensdauer, umfassend eine Restlebensdauer des Bauteils, basierend auf dem Bauteilmodell, wobei die Bauteillebensdauer eine Restlebensdauer, Remaining Useful Life (RUL), Ausfallzeit, Wartungszeit des Bauteils beinhaltet und wobei die Bauteillebensdauer auf der mit dem zum Erzeugen des Bauteilmodells verwendeten validierten Sensorprofil assoziierten Lebensdauer basiert; und

Verwalten des Bauteils (280) unter Verwendung des Bauteilmodells über die Lebensdauer des Bauteils (280), wobei das Verwalten des Bauteils das Entfernen des Bauteils aus einer Fertigungslinie eines industriellen Systems und das Vornehmen einer Wartung an dem Bauteil basierend auf der bestimmten Wartungszeit umfasst.

2. Verfahren nach Anspruch 1, das ferner Folgendes umfasst:
Bestimmen einer Restlebensdauer eines das Bauteil (280, 380) umfassenden technischen Systems (385) basierend auf der Restlebensdauer des Bauteils, einer Verfügbarkeit von Ersatzteilen und Wartbarkeitsparametern.

3. Verfahren nach Anspruch 1 oder Anspruch 2, das ferner Folgendes umfasst:
Vorhersagen einer Ausfallzeit für eine Anlage (370), in der sich das Bauteil (280, 380) befindet, basierend auf der Restlebensdauer des Bauteils und/oder der Restlebensdauer des technischen Systems (385).

4. Verfahren nach Anspruch 1, das ferner Folgendes umfasst:
Auswählen des mindestens einen validierten Sensorprofils unter Verwendung einer Technik des überwachten Lernens oder einer Technik des unüberwachten Lernens.

5. Verfahren nach Anspruch 1, das ferner Folgendes umfasst:

Schätzen einer erweiterten Lebensdauer des Bauteils (280) basierend auf dem Bauteilmodell;
Bereitstellen eines Nutzungsprofils des Bauteils (280) basierend auf der erweiterten Lebensdauer; und
Vorhersagen der Bauteillebensdauer basierend auf der erweiterten Lebensdauer.

6. Verfahren nach Anspruch 1, wobei das Verwalten des Bauteils (280) unter Verwendung des Bauteilmodells über die Lebensdauer des Bauteils (280) Folgendes umfasst:
Detektieren eines oder mehrerer Fehler in dem Bauteil (280) basierend auf dem Bauteilmodell.

7. Verfahren nach Anspruch 1, wobei das Verwalten des Bauteils (280) unter Verwendung des Bauteilmodells über die Lebensdauer des Bauteils (280) Folgendes umfasst:
Instanziieren des Bauteils (280) in einem Bauteilverwaltungssystem basierend auf dem Bauteilmodell, wenn das Bauteil (280) nicht durch das Bauteilverwaltungssystem erkannt werden kann.

8. Verfahren nach Anspruch 1, wobei das Verwalten des Bauteils (280) unter Verwendung des Bauteilmodells über die Lebensdauer des Bauteils (280) Folgendes umfasst:
Verfolgen des Bauteils (280) über die Lebensdauer des Bauteils (280) durch Erzeugen des Bauteilmodells in Echtzeit.

9. Einrichtung (200) zum Verwalten eines Bauteils (280) über die Lebensdauer des Bauteils (280), wobei die Einrichtung Folgendes umfasst:

eine oder mehrere Verarbeitungseinheiten (204); und
eine Speichereinheit (210), die kommunikativ mit der einen oder den mehreren Verarbeitungseinheiten (204) gekoppelt ist, wobei die Speichereinheit (210) ein Bauteilmodul (280) umfasst, das in Form von durch die eine oder die mehreren Verarbeitungseinheiten (204) ausführbaren maschinenlesbaren Anweisungen gespeichert ist, wobei das Bauteilmodul (280) dazu ausgelegt ist, einen oder mehrere Verfahrensschritte nach den Ansprüchen 1 bis 8 durchzuführen.

10. System (300), das Folgendes umfasst:

eine oder mehrere Vorrichtungen, die dazu in der Lage sind, mit einem Betrieb von Bauteilen (380) in mehreren Anlagen (370) assoziierte Bedingungsdaten bereitzustellen; und
eine Einrichtung (200) nach Anspruch 9, die kommunikativ mit der einen oder den mehreren Vorrichtungen gekoppelt ist, wobei die Einrichtung dazu ausgelegt ist, die Bauteile (380) zu verwalten und eine Ausfallzeit in mindestens einer der mehreren Anlagen zu bestimmen.

11. Computerprogrammprodukt mit darin gespeicherten maschinenlesbaren Anweisungen, die bei Ausführung durch eine oder mehrere Verarbeitungseinheiten (204) bewirken, dass die eine oder die mehreren Verarbeitungseinheiten (204) ein Verfahren nach den Ansprüchen 1 bis 8 durchführen.

**Revendications**

1. Procédé de gestion d'actifs (280) tout au long de leur cycle de vie, le procédé comprenant :

l'obtention de données de capteurs auprès d'une pluralité de capteurs (282, 284, 286, 288) associées au fonctionnement de l'actif (280) et à un environnement de fonctionnement associé à l'actif (280), les données de capteurs étant des données d'état sous forme d'une mesure de paramètres de fonctionnement associés à un fonctionnement de l'actif, les actifs comportant un mécanisme quelconque dans un système technique ou une infrastructure/installation technique tel qu'un moteur, un engrenage, un palier, un arbre, un appareillage de commutation,
un rotor, un disjoncteur, des dispositifs de protection, des unités terminales distantes, des transformateurs, des bobines de réactance, des sectionneurs, un entraînement par engrenages, des bobines de gradient, un aimant, des bobines radiofréquences, les systèmes techniques comportant un véhicule électrique, des unités d'automatisation, des turbines, de gros entraînements, un scanner d'Imagerie par Résonance Magnétique (IRM), et les données de capteurs comprenant des données provenant de capteurs tels qu'un capteur de température, de pression, de vibration, de son, de courant, de tension, de flux ;
la génération d'un ensemble de profils de capteur pour l'actif (280) par un jumeau numérique de l'actif, le jumeau numérique étant configuré pour répliquer des conditions de fonctionnement sensiblement similaires de l'actif, le jumeau numérique désignant des modèles paramétriques des paramètres de fonctionnement, des modèles de prédiction de l'actif basés sur les données de capteurs et des données de capteurs historiques de l'actif, les profils de capteur désignant des données de capteurs virtuelles générées sur la base du jumeau numérique de l'actif, l'ensemble de profils de capteur comprenant des représentations de l'actif (280) en fonction d'au moins un environnement de fonctionnement associé à l'actif (280) ;
la détermination d'une variation de profil pour l'ensemble de profils de capteur associables à l'actif (280), la variation de profil étant déterminée par comparaison d'un profil d'actif de l'actif (280) et des profils de capteur de la pluralité de capteurs, le profil d'actif comportant des données de capteurs qui sont capturées en temps réel, et le profil d'actif désignant un profil de fonctionnement de l'actif et un profil de charge de l'actif ;
la validation de l'ensemble de profils de capteur sur la base d'une comparaison du profil d'actif et des profils de capteur générés par le jumeau numérique de l'actif (280), la validation de l'ensemble de profils de capteur étant réalisée par détermination de la variation de profil pour chacun de l'ensemble de profils de capteur, la variation de profil étant déterminée par comparaison du profil d'actif et des profils de capteur ;
l'identification d'un ou de plusieurs profils de capteur validés dont la variation de profil reste en deçà d'un seuil de variabilité prédéterminé ;

la détermination d'au moins un profil de capteur validé pour l'actif (280) parmi l'ensemble de profils de capteur validés sur la base des données de capteurs par identification d'un ou de plusieurs profils de capteur validés dont la variation de profil reste en deçà du seuil de variabilité prédéterminé, et par sélection de l'au moins un profil de capteur validé dont la variation de profil est la plus faible, la sélection de l'au moins un profil de capteur validé dont la variation de profil est la plus faible comprenant :

le calcul d'un coefficient de similarité par comparaison des données de capteurs du profil d'actif et des profils de capteur validés pour l'actif (280), et le coefficient de similarité étant déterminé par similarité cosinus ou similarité Jaccard ; et

la sélection d'au moins un profil de capteur validé pour l'actif (280) sur la base du coefficient de similarité ;

la génération d'un modèle d'actif pour l'actif (280) sur la base de l'au moins un profil de capteur validé associé à l'actif (280), le modèle d'actif comprenant une durée de vie d'actif, un modèle de défauts, des paramètres de fonctionnement et un impact prédit d'un défaut de l'actif sur la durée de vie d'actif, le profil de capteur désignant des paramètres de capteur tels qu'une sensibilité de capteur et des conditions limites de capteur, la génération du modèle d'actif pour l'actif (280) sur la base de l'au moins un profil de capteur validé associé à l'actif (280) comprenant :

la génération du modèle de défauts représentant le profil de fonctionnement à l'aide de signatures de défaut d'une ou de plusieurs indications de défaut, les une ou plusieurs indications de défaut étant détectées dans les données de capteur sur la base d'une comparaison à l'au moins un profil de capteur validé,

et les signatures de défaut désignant des empreintes électroniques des indications de défaut dans l'actif, les signatures de défaut contenant des informations concernant diverses conditions d'état de santé de l'actif ; et

la mise à jour du modèle d'actif avec le modèle de défauts ;

la détermination d'une durée de vie résiduelle validée pour l'au moins un profil de capteur validé par calcul d'une probabilité de survie de l'actif pendant un intervalle de temps supplémentaire sur la base du modèle d'actif et du modèle de défauts ;

la mise à jour du modèle d'actif avec la durée de vie résiduelle validée de l'au moins un profil de capteur validé ;

la détermination d'une durée de vie d'actif comprenant une durée de vie résiduelle d'actif sur la base du modèle d'actif, la durée de vie d'actif comportant une durée de vie résiduelle d'actif, une durée de vie résiduelle utile (RUL), un temps d'indisponibilité, un temps de maintenance, et la durée de vie d'actif étant basée sur la durée de vie associée au profil de capteur validé utilisé pour générer le modèle d'actif ; et

la gestion de l'actif (280) à l'aide du modèle d'actif tout au long du cycle de vie de l'actif (280), la gestion de l'actif comprenant le retrait de l'actif d'une chaîne de fabrication d'un système industriel et l'enlèvement de l'actif pour maintenance sur la base du temps de maintenance déterminé.

2. Procédé selon la revendication 1, comprenant en outre :
la détermination d'une durée de vie résiduelle d'un système technique (385) comprenant l'actif (280, 380) sur la base de la durée de vie résiduelle d'actif, d'une disponibilité de pièces de rechange et de paramètres de facilité d'entretien.

3. Procédé selon la revendication 1 ou la revendication 2, comprenant en outre :
la prédiction d'un temps d'indisponibilité pour une installation (370) dans laquelle l'actif (280, 380) est implanté sur la base de la durée de vie résiduelle d'actif et/ou de la durée de vie résiduelle du système technique (385).

4. Procédé selon la revendication 1, comprenant en outre :
la sélection de l'au moins un profil de capteur validé à l'aide soit d'une technique d'apprentissage supervisé soit d'une technique d'apprentissage non supervisé.

5. Procédé selon la revendication 1, comprenant en outre :

l'estimation d'une durée de vie écoulée de l'actif (280) sur la base du modèle d'actif ;
le rendu d'un profil d'utilisation de l'actif (280) sur la base de la durée de vie écoulée ; et
la prédiction de la durée de vie d'actif sur la base de la durée de vie écoulée.

**6.** Procédé selon la revendication 1, dans lequel la gestion de l'actif (280) à l'aide du modèle d'actif tout au long du cycle de vie de l'actif (280) comprend :
la détection d'un ou de plusieurs défauts dans l'actif (280) sur la base du modèle d'actif.

**7.** Procédé selon la revendication 1, dans lequel la gestion de l'actif (280) à l'aide du modèle d'actif tout au long du cycle de vie de l'actif (280) comprend :
l'instanciation de l'actif (280) sur un système de gestion d'actif sur la base du modèle d'actif lorsque l'actif (280) n'est pas reconnaissable par le système de gestion d'actif.

**8.** Procédé selon la revendication 1, dans lequel la gestion de l'actif (280) à l'aide du modèle d'actif tout au long du cycle de vie de l'actif (280) comprend :
le suivi de l'actif (280) tout au long du cycle de vie de l'actif (280) par génération du modèle d'actif en temps réel.

**9.** Appareil (200) de gestion d'un actif (280) tout au long du cycle de vie de l'actif (280), l'appareil comprenant :

une ou plusieurs unités de traitement (204) ; et
une unité de mémoire (210) couplée en communication aux une ou plusieurs unités de traitement (204), l'unité de mémoire (210) comprenant un module d'actif (280) stocké sous forme d'instructions lisibles par machine exécutables par les une ou plusieurs unités de traitement (204), le module d'actif (280) étant configuré pour réaliser une ou plusieurs étapes de procédé selon les revendications 1 à 8.

**10.** Système (300), comprenant :

un ou plusieurs dispositifs aptes à fournir des données d'état associées au fonctionnement d'actifs (380) dans une pluralité d'installations (370) ; et
un appareil (200) selon la revendication 9, couplé en communication aux un ou plusieurs dispositifs, l'appareil étant configuré pour gérer les actifs (380) et déterminer un temps d'indisponibilité dans au moins une de la pluralité d'installations.

**11.** Produit-programme d'ordinateur dans lequel sont stockées des instructions lisibles par machine qui, lorsqu'elles sont exécutées par une ou plusieurs unités de traitement (204), amènent les une ou plusieurs unités de traitement (204) à réaliser un procédé selon les revendications 1 à 8.

## FIG 1A

102 → 104 → 106 → 108

## FIG 1B

112 → 114 → 116 → 118

## FIG 1C

# FIG 2

# FIG 3

FIG 4

FIG 5

FIG 6

FIG 7

EP 3 617 824 B1

EP 3 617 824 B1

# FIG 8

27

**EP 3 617 824 B1**

## REFERENCES CITED IN THE DESCRIPTION

**Patent documents cited in the description**

- WO 2016033247 A2
- US 2017323231 A1
- US 2018210436 A1